# EUROPEAN PATENT APPLICATION

(11) **EP 2 506 163 A1**
(43) Date of publication of application: **03.10.2012**
(21) Application number: 11187328.7
(22) Date of filing: 31.10.2011
(51) Int. Cl.: G06F 17/30

(54) **Information processing apparatus and information processing method**

(30) Priority: 31.03.2011 JP 2011078676
(71) Applicant: Kabushiki Kaisha Toshiba, Tokyo 105-8001 (JP)
(72) Inventor: Iida, Takayuki, Tokyo, 105-8001 (JP); Omura, Sumi, Tokyo, 105-8001 (JP); Nagahama, Kentaro, Tokyo, 105-8001 (JP); Horiuchi, Kensuke, Tokyo, 105-8001 (JP)
(74) Representative: Henkel, Breuer & Partner

(57) **Abstract**

According to one embodiment, an information processing apparatus includes a content display (32), a storage (48), and a keyword display (52). The content display (32) comprises tabs capable of displaying contents, one of the tabs being an active tab. The storage (48) stores keywords extracted from the contents displayed in the tabs for respective tabs. The keyword display (52) reads a keyword extracted from a content displayed in the active tab from the storage (48) and displays the read keyword.

## Description

Embodiments described herein relate generally to an information processing apparatus and information processing method for retrieving information.

A large number of Web sites each configured by one or a plurality of Web pages are connected to the Internet. An information processing apparatus connected to the Internet can provide various information items to the user by accessing the Web page. The Web page corresponds to a file described by HTML (Hyper Text Markup Language). Further, the Web page is identified by a URI (Uniform Resource Indicator) or URL (Uniform Resource Locator) (that is hereinafter referred to as a URI). The Web site is a set of Web pages. Since access can be made to a large number of Web pages, it is difficult for the user of the information processing apparatus to detect a useful Web page. Therefore, the user of the apparatus specifies a noticeable vocabulary included in a Web page accessed. The apparatus deals with the specified vocabulary as keywords or extracts keywords from character strings surrounding the vocabulary, specifies the keywords, retrieves a Web page including the specified keywords and accesses the retrieved Web page.

However, in order to cause the apparatus to retrieve the Web page, it is necessary for the user of the apparatus to select and specify a noticeable vocabulary. Therefore, it is inevitable to carefully consider the meaning of the vocabulary and perform an operation of correctly specifying the selected vocabulary and, as a result, there occurs a problem that the apparatus cannot easily perform the retrieve operation.

In order to solve the above problem, means for automatically extracting a keyword from the Web page displayed on the information processing apparatus is developed.

The conventional information processing apparatus automatically extracts a keyword from a Web page displayed on the apparatus, but it is necessary to re-extract a keyword each time the display page is changed. For example, when a large number of Web pages are switched and displayed by use of a large number of tabs as in a tab browser, switching of display keywords cannot follow switching of display contents in some cases.

A general architecture that implements the various features of the embodiments will now be described with reference to the drawings. The drawings and the associated descriptions are provided to illustrate the embodiments and not to limit the scope of the invention.
FIG. 1 is an exemplary view showing one example of the appearance of an information processing apparatus according to a first embodiment.
FIG. 2 is an exemplary block diagram showing one example of the system configuration of the information processing apparatus according to the first embodiment.
FIG. 3 is an exemplary view showing one example of a flowchart for illustrating an information processing method according to the first embodiment.
FIG. 4 is an exemplary view showing one example of data stored in an extracted keyword storage 48 according to the first embodiment.
FIG. 5 is an exemplary view showing one example of a keyword display screen according to the first embodiment.
FIG. 6 is an exemplary view showing one example of a search result display screen according to the first embodiment.
FIG. 7 is an exemplary block diagram showing one example of the system configuration of an information processing apparatus according to a second embodiment.
FIG. 8 is an exemplary diagram showing one example of data stored in the extracted keyword storage 48 according to the second embodiment.
FIG. 9 is an exemplary view showing one example of a flowchart for illustrating an information processing method according to the second embodiment.
FIG. 10 is an exemplary block diagram showing one example of the system configuration of an information processing apparatus according to a third embodiment.
FIG. 11 is an exemplary diagram showing one example of a flowchart for illustrating an information processing method according to the third embodiment.
FIG. 12 is an exemplary view showing one example of a search result page of the third embodiment.
FIG. 13 is an exemplary view showing one example of a keyword display screen of a fourth embodiment.

Various embodiments will be described hereinafter with reference to the accompanying drawings.

In general, according to one embodiment, an information processing apparatus includes a content display, a storage, and a keyword display. The content display comprises tabs capable of displaying contents, one of the tabs being an active tab. The storage stores keywords extracted from the contents displayed in the tabs for respective tabs. The keyword display reads a keyword extracted from a content displayed in the active tab from the storage and displays the read keyword.

### [First Embodiment]

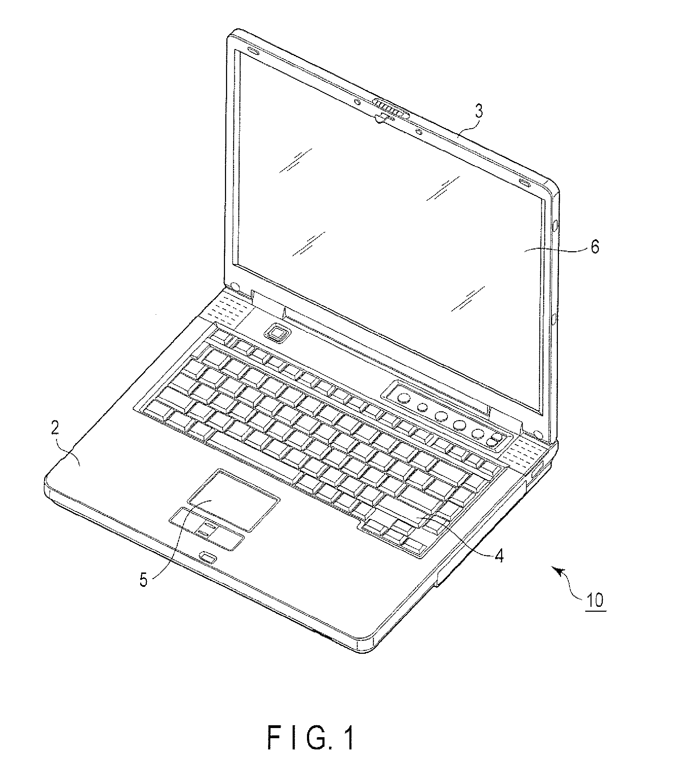

FIG. 1 is a perspective view illustrating an example of an external appearance of an information processing apparatus. In the following description, for example, an information processing apparatus is realized as a notebook-type personal computer 10. However, the form of the information processing apparatus is not limited to a notebook-type personal computer. It may be any form such as a desktop-type personal computer, a slate-type or tablet-type portable information terminal, and a cellular phone.

As shown in FIG. 1, the personal computer 10 includes a computer main body 2 and a display 3. The display 3 includes an LCD (Liquid Crystal Display) 6. The display 3 is attached to the computer main body 2 in such a manner that the display 3 can freely pivot between an open position in which the upper surface of the computer main body 2 is exposed and a closed position in which the upper surface of the computer main body 2 is covered. The computer main body 2 has a thin box-shaped housing. A keyboard 4, a touch pad 5, and the like are arranged on the upper surface of the computer main body 2.

When the personal computer 10 is activated, the personal computer 10 is operated in accordance with an input signal provided by an input interface such as the keyboard 4 or the touch pad 5 by user operation. The personal computer 10 displays information on the LCD 6 in accordance with the input signal. For example, when a user selects a link on a web page displayed on the LCD 6 while the web page (hereinafter referred to as contents) is displayed on the LCD 6, the user can use the above input interface to select the link displayed on the LCD 6.

The first embodiment has a tab browser function of switching and displaying a plurality of contents by means of a plurality of tabs. Further, the first embodiment also has a function of automatically extracting a keyword from displayed content, displaying and storing the extracted keyword when the content is displayed.

In the first embodiment, although the detailed explanation is made later, it is assumed that a device includes a relatively large display screen, a content is displayed on the main portion of the display screen, and an extracted keyword is always displayed as a gadget on a blank portion of the display screen. At the same time as display of content, keywords extracted from the content are simultaneously displayed, and therefore, associated contents can be easily retrieved based on a selected keyword simply by selecting the keyword from the displayed keywords. However, the configuration of display of the keywords is not limited to the gadget always displayed and keywords may be displayed by using an application on the LCD 6. For example, a content may be only displayed, a keyword display button is displayed on an end portion of the content display screen and the screen may be switched from the content display screen to the keyword display screen when the button is selected. In the case of a device such as a mobile terminal having a small screen, switching display may be preferable to continuous display by using the gadget.

For example, the content displayed on the LCD 6 includes HTML documents acquired from the Internet, program-related information of television or character strings or text data such as metadata. Further, the content is not limited to the above data items and may be a content that contain character strings or text data that can be extracted by morpheme analysis as will be described later. Further, even when a keyword cannot be extracted from a part of the content displayed on the LCD 6, it is sufficient if content from which a keyword can be extracted is contained in a part of the content displayed on the LCD 6.

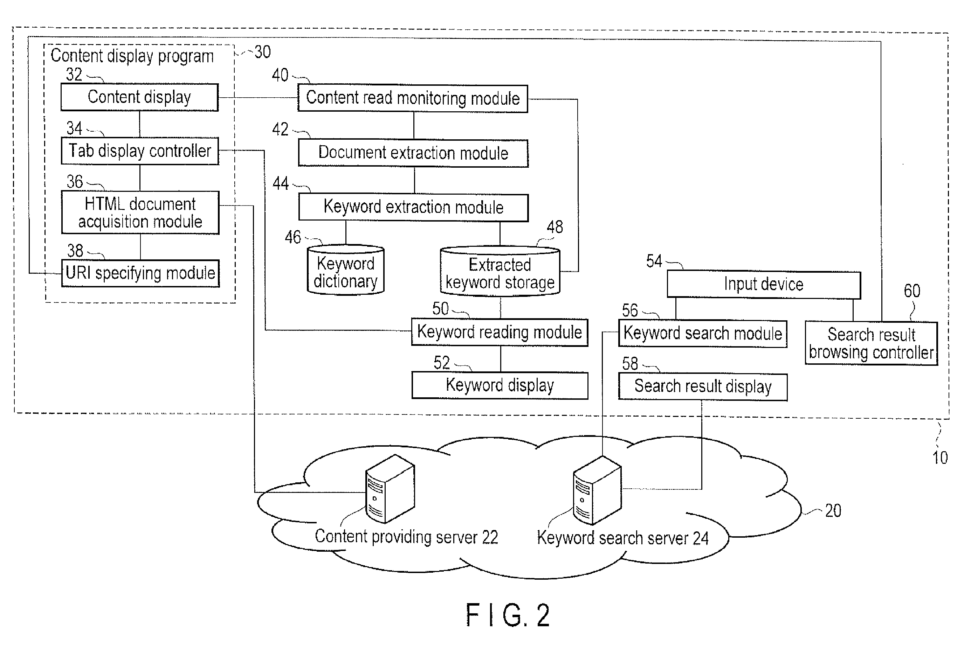

FIG. 2 is a block diagram showing the system configuration of the first embodiment. The processing system of the first embodiment includes the computer 10, a content providing server 22 and keyword search server 24. For example, the content providing server 22 and keyword search server 24 are servers that can be accessed via an IP network 20 such as the Internet. However, the content providing server 22 and keyword search server 24 are not indispensable. If the personal computer 10 has the equivalent function to that of the above servers, it is not necessary to provide the content providing server 22 and keyword search server 24. That is, it is possible to use a system that retrieves contents stored in the personal computer 10 itself based on a keyword extracted by the keyword extraction function which the personal computer 10 itself has.

The personal computer 10 includes a content display program 30. The content display program 30 realizes a URI specifying module 38, HTML document acquisition module 36, tab display controller 34 and content display 32. The HTML document acquisition module 36 is connected to the content providing server 22. A content read monitoring module 40 is connected to the content display 32. An output of the content read monitoring module 40 is connected to a document extraction module 42. An output of the document extraction module 42 is connected to a keyword extraction module 44. A keyword dictionary 46 and extracted keyword storage 48 are connected to the keyword extraction module 44. An output of the extracted keyword storage 48 is connected to a keyword reading module 50. An output of the keyword reading module 50 is connected to a keyword display 52.

A keyword search module 56 and search result display 58 are connected to the keyword search server 24. An input device 54 is connected to a keyword search module 56 and search result browsing controller 60. The search result browsing controller 60 is connected to the URI specifying module 38.

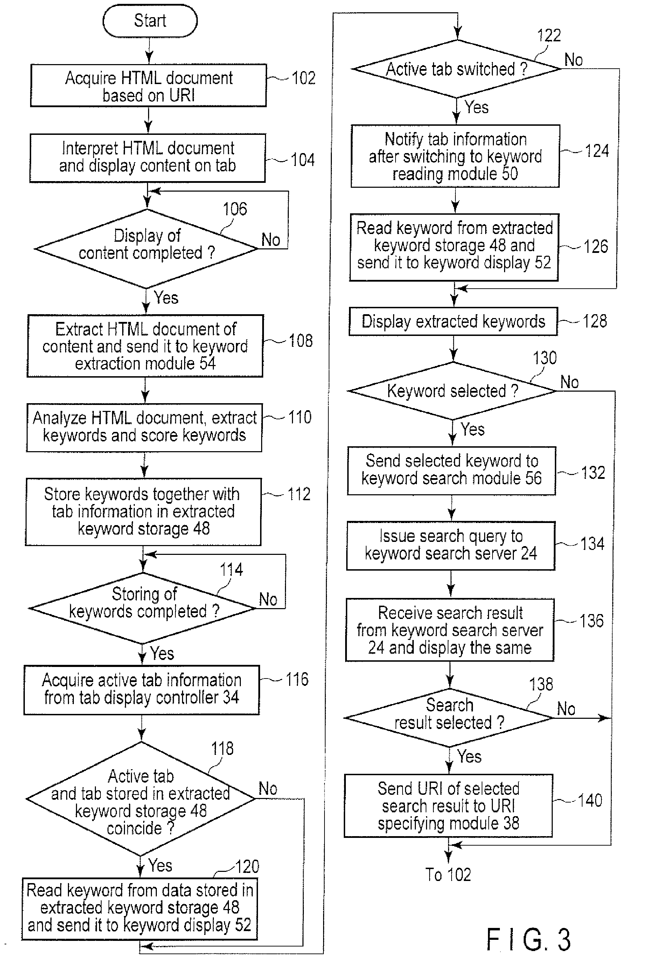

FIG. 3 is a flowchart for illustrating an information processing method of the first embodiment.

The personal computer 10 uses an input interface such as the keyboard 4 or touchpad 5 to specify a URI by the user and is connected to the content providing server 22 via the URI specifying module 38 realized by the content display program 30 based on the specified URI. The HTML document acquisition module 36 acquires an HTML document corresponding to the specified URI from the content providing server 22 (block 102).

The HTML document acquisition module 36 sends the HTML document acquired from the content providing server 22 to the tab display controller 34 realized by the content display program 30. The tab display controller 34 performs a control operation to select a tab from a plurality of tabs in the screen of the LCD 6 that is used for display. The content display 32 realized by the content display program 30 interprets the HTML document and displays a content based on the interpreted HTML document of the LCD 6 on the selected tab (block 104). The content display by the content display 32 can be made by use of an active tab or by use of an inactive tab.

The content read monitoring module 40 monitors to determine whether the reading of the content displayed by the content display 32 has been completed or not (block 106) . When the content read monitoring module 40 confirms that the reading of the content is completed, it notifies this to the document extraction module 42 and sends the content.

when the document extraction module 42 receives a notification indicating completion of reading of the content from the content read monitoring module 40, the module 42 extracts the HTML document of the content displayed by the content display 32, and supplies the HTML document to the keyword extraction module 44 (block 108).

The keyword extraction module 44 analyzes the HTML document received from the document extraction module 42 and extracts a characteristic keyword. Specifically, the module 44 extracts a text that seems to be a main text from the HTML document and divides the text into morphemes each of which is the minimum unit having a meaning as a language based on words included in the keyword dictionary 46. In the keyword dictionary 46, for example, words having parts of speech of morphemes that can be determined are stored. Each morpheme of the text divided by morpheme analysis is used as an extracted keyword. The extracted keywords are sequentially arranged in order from the highest score, for example (block 110). The score indicates the height of frequency at which an extracted keyword appears, for example. The method for arranging the keywords may be a method for sequentially arranging keywords in order from the lowest score in addition to the method for sequentially arranging keywords in order from the highest score. Further, it is possible to arrange keywords in the extracted order without rearranging the extracted keywords.

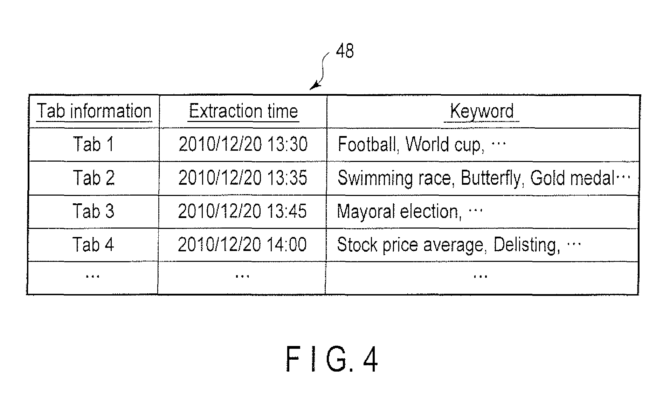

The keyword extraction module 44 stores the extracted keywords in the extracted keyword storage 48 together with tab information used for displaying the content (block 112). One example of data stored in the extracted keyword storage 48 is shown in FIG. 4. In this example, tab information for specifying whether the keyword is a keyword extracted from the content displayed on one of the tabs is acquired from the tab display controller 34 and is recorded in correspondence with the date and time (extraction time) at which the tab information is extracted and the extracted keyword. The order of data items to be stored is controlled to arrange the data items with higher scores in higher positions. The number of keywords to be stored may be the number of keywords that are extracted from the document or the upper limit may be set.

The keyword reading module 50 monitors the state of progress of data writing in the extracted keyword storage 48 (block 114). When writing of the keywords is completed, the module 50 acquires presently active tab information from the tab display controller 34 (block 116) and determines whether or not the presently active tab coincides with tab information of the keyword stored in the extracted keyword storage 48 (block 118). When coincidence is detected, data related to the keyword is read from data stored in the extracted keyword storage 48 and is supplied to the keyword display 52 (block 120). If coincidence is not detected, the process proceeds to the block 122 while skipping the block 120.

The tab display controller 34 monitors switching of the active tab by the user (block 122) and notifies tab information after switching to the keyword reading module 50 (block 124) when the active tab is switched. The keyword reading module 50 reads data of the keyword stored in the extracted keyword storage 48 based on tab information and sends the same to the keyword display 52 (block 126) . If switching of the active tab is not detected, the process proceeds to the block 128 while skipping the blocks 124 and 126.

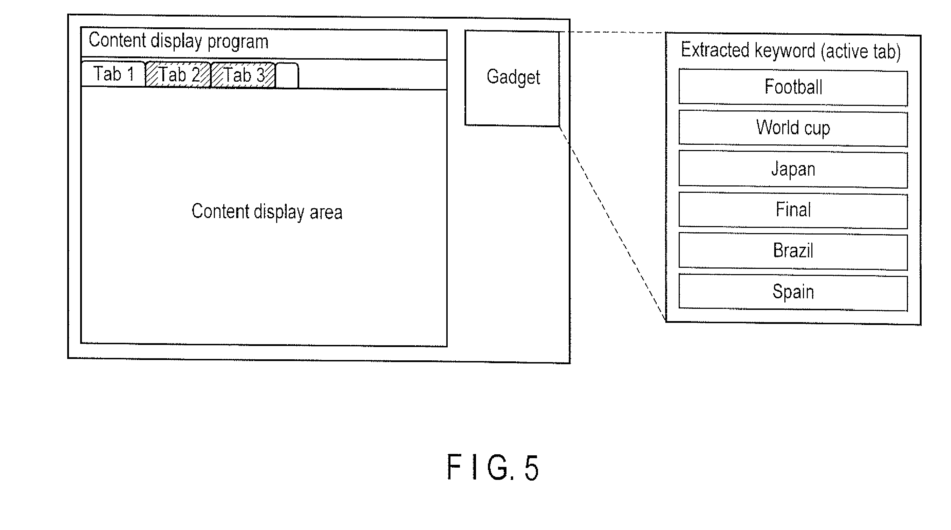

The keyword display 52 displays data of the extracted keyword (the keyword extracted from the content displayed on the active tab) received from the keyword reading module 50 (block 128). One example of display is shown in FIG. 5. The extracted keyword is displayed as a gadget on the display screen of the LCD 6 and each keyword is displayed as a label of the button. If active tab is switched, the keyword displayed on the gadget is also switched.

The input device 54 monitors selection of the keyword by the user (block 130). If the user presses a button on which the keyword is displayed, the input device 54 detects selection and notifies of the keyword displayed on the pressed button to the keyword search module 56 (block 132). The keyword search module 56 issues a search query used for retrieving information related to the keyword to the keyword search module 24 on the Internet (block 134). When selection of the keyword is not detected, the process returns to block 102.

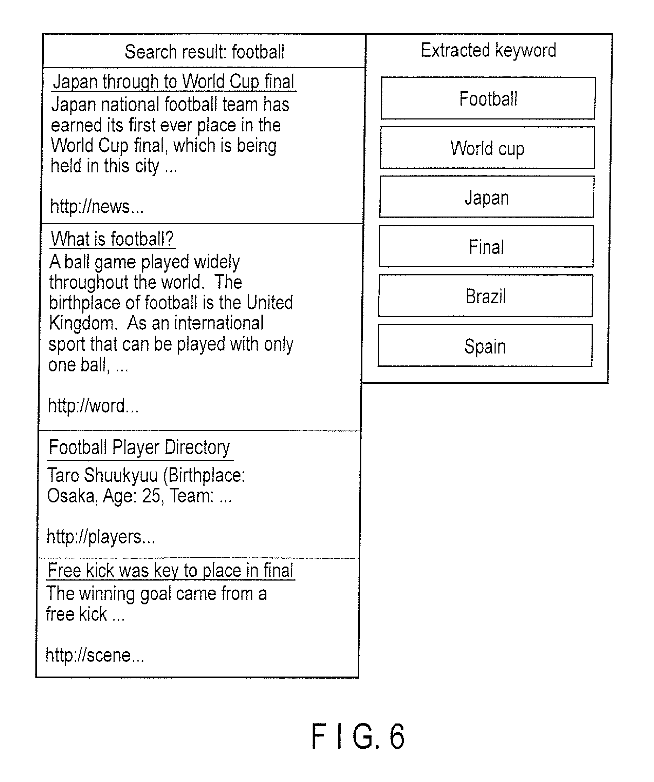

The search result display 58 receives a search result obtained by means of the search query issued by the keyword search module 56 from the keyword search module 24 and displays the search result (block 136). One example of display of the search result is shown in FIG. 6. The search result indicates contents including the keywords and is configured by the title of a Web page, snippet, URI of the contents or the like.

The input device 54 monitors selection of the search result by the user (block 138) and when the user selects one of the search results, the input device 54 detects selection and notifies the same to the search result browsing controller 60. The search result browsing controller 60 notifies the URI of the selected search result to the URI specifying module 38. The process returns to the block 102 when selection of the search result is not detected.

As described above, according to the first embodiment, a keyword extracted from a content is stored in correspondence with tab information in which the content is displayed (block 112 in FIG. 3). Further, when tabs are switched by monitoring a switching operation of an active tab by the user (block 122 in FIG. 3), keywords extracted in the past from the content displayed on the active tab are read from the extracted keyword storage 48, then gadget display can be instantly made, display of the keyword can be switched in connection with switching of content display and the operability and usability of the user for search can be enhanced.

For example, conventionally, keyword search is performed by copying a retrieved keyword from a displayed document to a search box by the user. However, since keywords extracted from the content displayed on the active tab are always displayed on a gadget, it is only required to select a keyword and the complicated operation of inputting and copying a keyword or the like becomes unnecessary and information related to the displayed content can be retrieved.

Further, since the keywords are displayed as the gadget and the display screen of the content is not concealed by the keywords, the content browsing behavior of the user will not be obstructed. Since the keywords are displayed as the gadget, naturally the extracted keywords are seen, and the user becomes interested in keywords that will not be used when the user himself performs search and the range of information acquired by the user by performing the retrieving operation can be enlarged.

Other embodiments will be explained. In the explanation for the other embodiments, portions corresponding to those of the first embodiment are denoted by the same reference numerals and the detailed explanation thereof is omitted.

### [Second Embodiment]

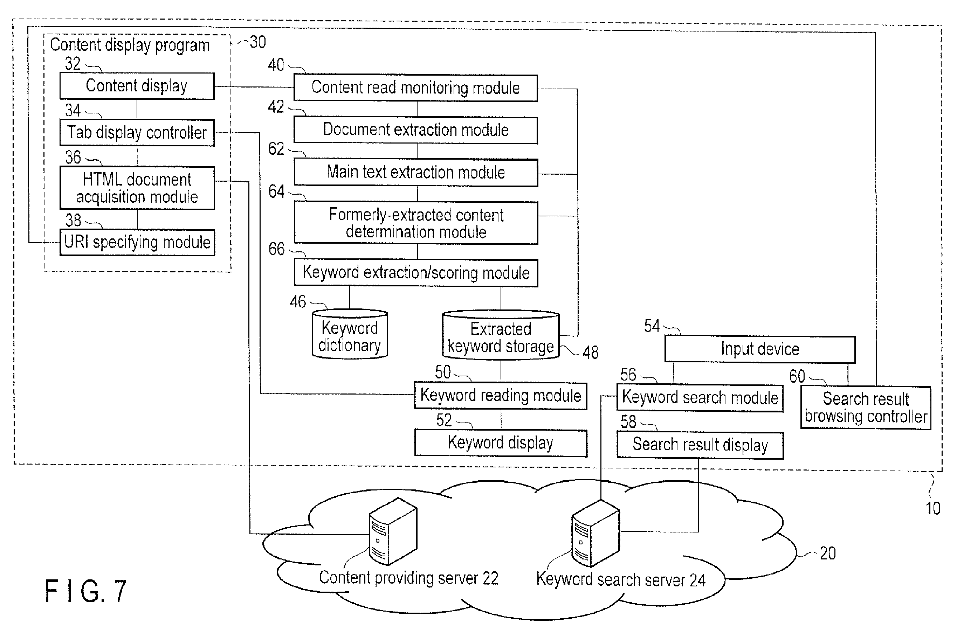

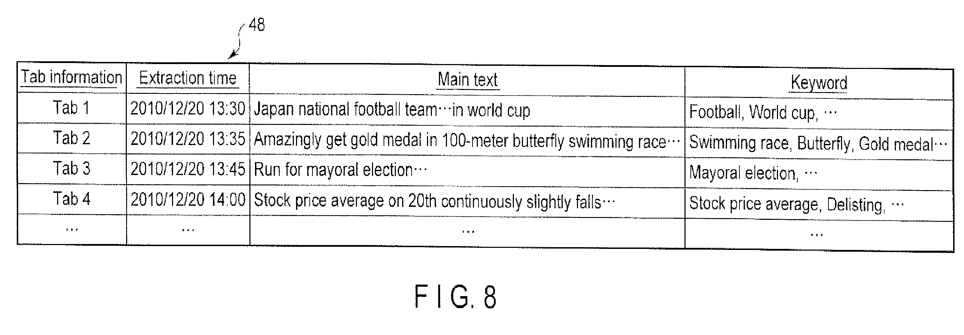

FIG. 7 is a block diagram showing the system configuration of a second embodiment. The second embodiment is different from the first embodiment in that the keyword extraction module 44 is divided into a main text extraction module 62 that extracts a text that seems to be a main text from an HTML document and a keyword extraction/scoring module 66 that subjects the text to morpheme analysis by using the keyword dictionary 46, attaches scores corresponding to the appearance frequencies to extracted keywords and sequentially arrange the keywords in order from the highest score and an formerly-extracted content determination module 64 is newly provided. Further, it is different in that a main text is added to data stored in the extraction keyword storage 48. One example of data stored in the extraction keyword storage 48 is shown in FIG. 8.

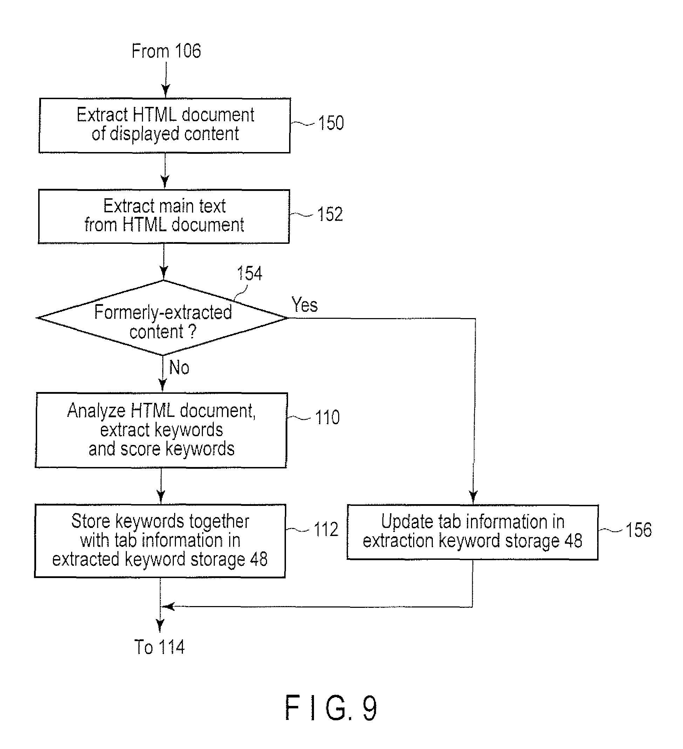

FIG. 9 is a flowchart for illustrating an information processing method of the second embodiment.

When the content read monitoring module 40 confirms that all of the contents to be displayed on the content display 32 are read in the block 106 of the flowchart of the first embodiment shown in FIG. 3, an HTML document of the displayed content is extracted (block 150) and a text that seems to be a main text is extracted from the HTML document (block 152). The extracted main text is compared with data stored in the extracted keyword storage 48 and it is determined whether or not the displayed content is a content from which the keyword is already extracted (block 154). When it is determined that the displayed content is the content from which the keyword is already extracted, extraction of the keyword from the content is omitted since the keyword is already stored in the extracted keyword storage 48. Then, corresponding keyword information in the extracted keyword storage 48 is copied and information of a tab that displays the content is stored together with main text information in the extracted keyword storage (block 156). For example, when the main text extracted from the content displayed on a tab 6 indicates "a stock price average on 20^{th} continuously slightly falls ...", information of a tab 4 of FIG. 8 is updated to the tab 6. Subsequently, the process proceeds to the block 114 of the flowchart (FIG. 3) of the first embodiment.

When it is determined that the displayed content is not a content from which the keyword is already extracted, the keyword extraction/scoring module 66 divides the main text into morphemes each of which is the minimum unit having a meaning as a language based on words included in the keyword dictionary 46. Each morpheme of the text divided by morpheme analysis is used as an extracted keyword. For example, the extracted keywords are sequentially arranged in order from the highest score (block 110). The keyword extraction/scoring module 66 stores (adds) the extracted keyword and main text together with tab information in the extracted keyword storage 48 (block 112). In a case where the amount of formerly-extracted content data items to be compared is increased, a process of replacing data by setting old data as data having "no" tab information without overwriting data is performed when data is added in the extracted keyword storage 48. For example, it is assumed that browsing is made in the order of page A, page B, and page C on a tab 1. Since only the newest result is stored when data is overwritten, only one data item of "tab 1: main text and keyword of page C" is stored. When data is replaced as "no" tab information, first, "tab 1: main text and keyword of page A" is stored when page A is browsed. Then, "tab 1: main text and keyword of page B" is stored when page B is browsed and data of "no tab: main text and keyword of page A" is also stored at the same time as data is changed. When the final page C is browsed, three data items of "tab 1: main text and keyword of page C", "no tab: main text and keyword of page A" and "no tab: main text and keyword of page B" are stored as data. By thus storing data browsed in the past as data having no tab information, the amount of formerly-extracted contents data items to be compared can be increased and the number of reuses can be increased. After this, the process proceeds to the block 114 of the flowchart (FIG. 3) of the first embodiment.

As described above, according to the second embodiment, the main text extracted from the HTML document is stored together with the keyword in the extracted keyword storage 48, the main text extracted from the HTML document of the displayed content is compared with the stored text and it is determined whether or not the displayed content is a content from which the keyword is already extracted in the past. Therefore, when a content is displayed on a new tab or when a content is displayed by "return to a preceding content" or "proceed to next content" of the existing tab, the already extracted keyword can be reused and the whole processing time can be reduced.

In a case of the HTML document acquired from the content providing server 22, the contents from a portal site may be different (news articles are different) depending on time even if the URI is the same. Thus, it becomes impossible to determine whether or not the content is a content from which a keyword is already extracted by simple comparison of URIs. However, according to the comparison of the main text as in the second embodiment, whether or not the displayed content is a content from which the keyword is already extracted in the past can be correctly determined.

### [Third Embodiment]

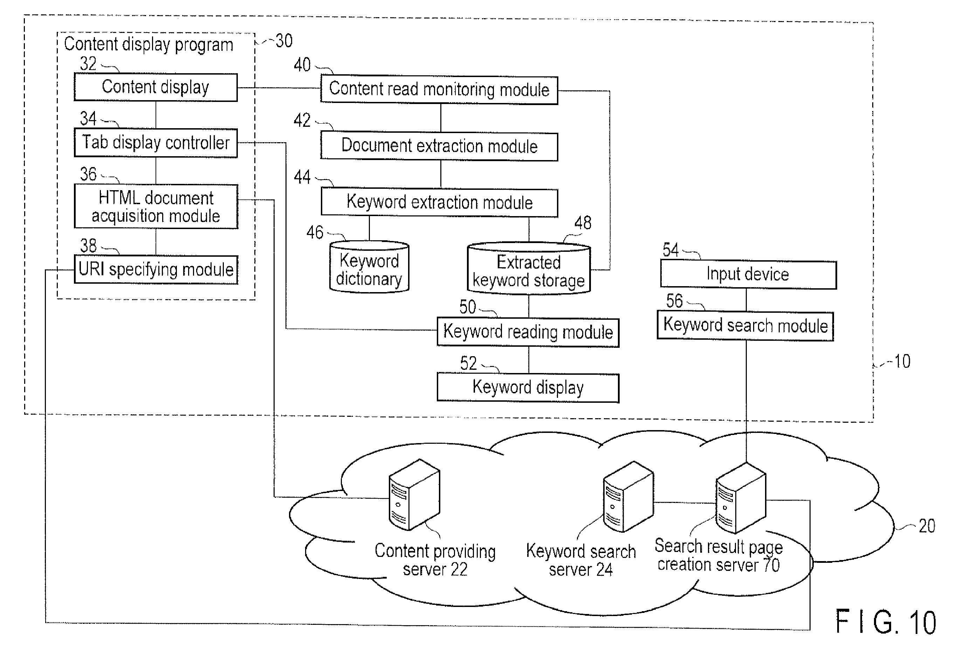

FIG. 10 is a block diagram showing the system configuration of a third embodiment. The third embodiment is different from the first embodiment in that a search result page creation server 70 is additionally provided in addition to the keyword search server 24, and the search result display 58 and search result browsing controller 60 are eliminated.

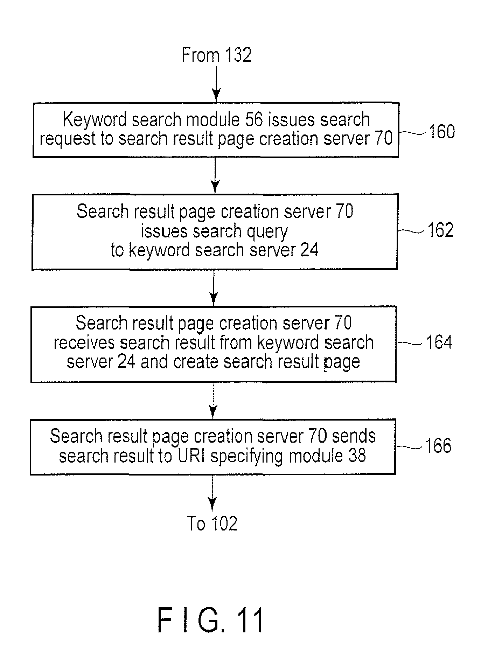

FIG. 11 is a flowchart for illustrating an information processing method according to the third embodiment.

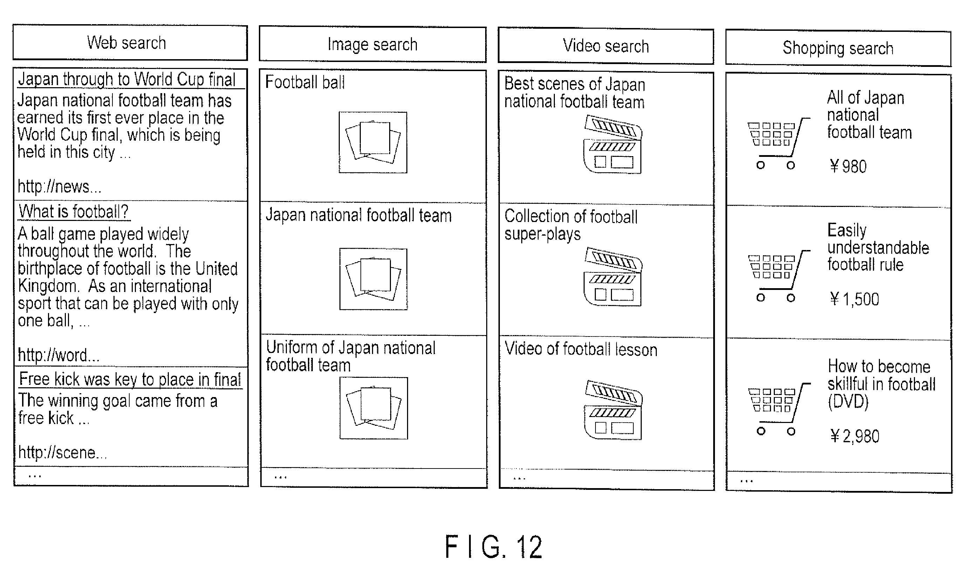

When the selected keyword is notified to the keyword search module 56 in the block 132 of the flowchart of the first embodiment shown in FIG. 3, the keyword search module 56 issues a search request including only a keyword as information to the search result page creation server 70 on the Internet (block 160) . The search result page creation server 70 issues a search query used for retrieving information related to the keyword to the keyword search server 24 based on the received keyword (block 162). The search query issued at this time may include a plurality of search queries related to Web search, image search, video search, shopping search and the like. The search result page creation server 70 receives a search result in response to one or a plurality of issued search queries from the keyword search server 24 and combines the results to create a search result page (block 164) . One example of the search result page based on the plurality of search queries is shown in FIG. 12. The search result page creation server 70 sets a URI to correspond to the created search result page and notifies the result to the URI specifying module 38 of the personal computer 10 that is a client (block 166).

The search result page may be displayed by use of a presently active tab or displayed as a new tab. Further, in order to prevent the search result page itself being from becoming an object of keyword extraction, a process for determination based on URI information may be additionally provided.

As described above, according to the third embodiment, the personal computer 10 on the client side sends the keyword to the search result page creation server 70 and displays the search result page created by the search result page creation server 70. Therefore, unlike the first embodiment, it is unnecessary to issue a search query and create a search result page and the load on the client side can be reduced. Further, a change of parameters of the search query and the change of design and layout of the search result page can be corrected on the side of the search result page creation server 70.

### [Fourth Embodiment]

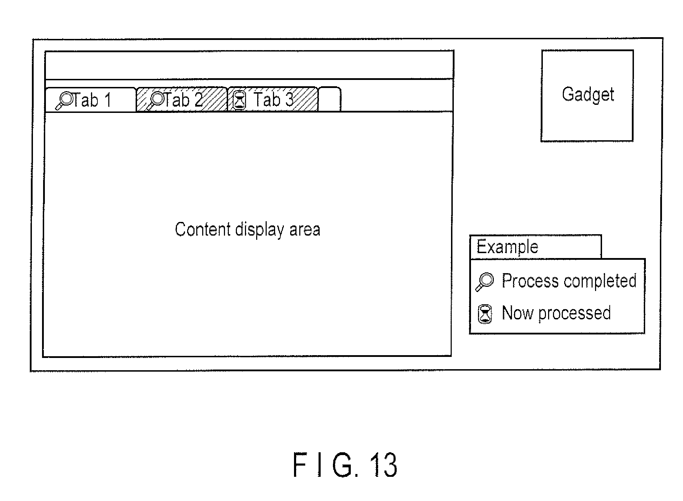

In the above embodiments, a content may be displayed on an inactive tab of the content display program. In this case, a waiting time occurs until the keyword is displayed if an active tab is switched before extraction of the keyword is completed. Further, even when an active tab is switched before completion of display of the search result based on the inactive tab, a waiting time similarly occurs until the search result is displayed. In the fourth embodiment, an event occurring when the keyword extraction process based on the inactive tab is terminated or when reading of the search result page is terminated is monitored to prevent the waiting time from occurring and the progressing state of a process in the tab is displayed. One example of display of a content display program is shown in FIG. 13.

In the example of FIG. 13, an icon that has been processed or is now being processed is displayed on a title bar of a tab. By this display, the user adjusts the timing at which a tab is switched to select a tab to be activated from the tabs that have been processed and can prevent the waiting time from occurring until the keyword or search result is displayed after the tab is activated.

Further, display of the progressing state can be indicated not by an icon but by a change of a character color of the text of the title bar or character style.

The fourth embodiment can be applied to any one of the first, second and third embodiments.

As described above, according to the fourth embodiment, since a process waiting time caused when the user browses an inactive tab that is now processed can be eliminated by monitoring the process based on the inactive tab, the usability of the user can be enhanced.

The various modules of the systems described herein can be implemented as software applications, hardware and/or software modules, or components on one or more computers, such as servers. While the various modules are illustrated separately, they may share some or all of the same underlying logic or code.

## Claims

1. An information processing apparatus comprising:
a content display (32) comprising tabs capable of displaying contents, one of the tabs being an active tab, **characterized by** further comprising:
a storage (48) configured to store keywords extracted from the contents displayed in the tabs for respective tabs; and
a keyword display (52) configured to read a keyword extracted from a content displayed in the active tab from the storage and to display the read keyword.

2. The apparatus of Claim 1, **characterized in that**
the content display (32) is configured to display the content in a part of a display screen; and
the keyword display (52) is configured to display the keyword in another part of the display screen.

3. The apparatus of Claim 1, **characterized in that**
the storage (48) is configured to extract a keyword from a content when the content is displayed in one of the tabs and to store the extracted keyword; and
the keyword display (52) is configured to acquire information of the active tab and to read the keyword extracted from a content displayed in the active tab from the storage (48).

4. The apparatus of Claim 1, **characterized in that** the storage (48) is configured to store identification information of the content for each tab, to determine whether identification information of a displayed content is already stored when a content is displayed in any one of the tabs, to extract a keyword when the identification information is not already stored, and to omit extraction of the keyword and change a tab of the identification information of the content already stored to the one of the tabs for displaying the content when the identification information is already stored.

5. The apparatus of Claim 4, **characterized in that** the identification information comprises a main text extracted from the content.

6. The apparatus of Claim 1, **characterized by** further comprising:
a selector (54) configured to select one of keywords displayed by the keyword display (52);
a transmitter (56) configured to transmit the selected keyword to an external search module;
a receiver (58) configured to receive a search result from the external search module; and
a search result display (58) configured to display the received search result.

7. The apparatus of Claim 6, **characterized in that** the search result display (58) is configured to display the search result in any one of the tabs of the content display (32).

8. The apparatus of Claim 1, **characterized by** further comprising:
a monitor (40) configured to monitor completion of extraction of a keyword from the content displayed in an inactive tab; and
a result display (32) configured to display a result of monitoring by the monitor in one of the tabs.

9. The apparatus of Claim 1, **characterized in that**
the content display (32) is configured to display the content on a first display screen;
the keyword display (52) is configured to display the keyword on a second display screen; and
one of the first and second display screens is active.

10. An information processing method comprising:
displaying contents in tabs, one of the tabs being an active tab, **characterized by** further comprising:
storing keywords extracted from the contents displayed in the tabs for respective tabs; and
reading a keyword extracted from a content displayed in the active tab and displaying the read keyword.

11. The method of Claim 10, **characterized in that** the content is displayed in a part of a display screen; and
the keyword is displayed in another part of the display screen.

12. The method of Claim 10, **characterized in that** a keyword is extracted from a content when the content is displayed in one of the tabs;
information of the active tab is acquired; and the keyword extracted from a content displayed in the active tab is read from a storage.

13. The method of Claim 10, **characterized by** further comprising:
storing identification information of the contents for each tab;
determining whether identification information of a displayed content is already stored when a content is displayed in any one of the tabs;
extracting a keyword when the identification information is not already stored; and
omitting extraction of the keyword and changing a tab of the identification information of the content already stored to the one of the tabs for displaying the content when the identification information is already stored.

14. The method of Claim 13, **characterized in that** the identification information comprises a main text extracted from the content.

15. The method of Claim 10, **characterized by** further comprising:
selecting one of displayed keywords;
transmitting the selected keyword to an external search module;
receiving a search result from the external search module; and
displaying the received search result.

16. The method of Claim 15, **characterized in that** the search result is displayed in any one of the tabs.

17. The method of Claim 10, **characterized by** further comprising:
monitoring completion of extraction of a keyword from the content displayed in an inactive tab; and
displaying a result of monitoring in one of the tabs.

18. The method of Claim 10, **characterized in that** the content is displayed on a first display screen;
the keyword is displayed on a second display screen; and
one of the first and second display screens is active.
